# EUROPÄISCHE PATENTSCHRIFT

(11) **EP 0 940 304 B1**
(45) Veröffentlichungstag und Bekanntmachung des Hinweises auf die Patenterteilung: **03.08.2005**
(21) Anmeldenummer: 99102812.7
(22) Anmeldetag: 25.02.1999
(51) Int. Cl.: B60R 21/26, B60R 21/20

(54) **Verbindungsleitung für ein Gassack-Insassenschutzsystem**
Connecting duct for a passenger airbag safety system
Canalisation de liaison pour un système de protection de passagers à coussin gonflable

(30) Priorität: 06.03.1998 DE 29804004 U; 30.07.1998 DE 29813636 U
(43) Veröffentlichungstag der Anmeldung: 08.09.1999
(73) Patentinhaber: TRW Automotive GmbH, 73553 Alfdorf (DE)
(72) Erfinder: Fischer, Anton, 73579 Leinweiler (DE)
(74) Vertreter: Sties, Jochen, Dipl.-Ing.

(56) Entgegenhaltungen:
- EP-A- 0 945 313
- DE-A- 1 956 677
- DE-A- 19 613 095
- DE-A- 19 738 741

## Beschreibung

Die Erfindung betrifft eine Verbindungsleitung für ein Gassack-Insassenschutzsystem gemäß dem Oberbegriff des Anspruchs 1.

Gassack-Insassenschutzsysteme dienen beispielsweise dazu, die Köpfe von Fahrzeuginsassen bei einem Seitenaufprall zu schützen. Hierzu entfaltet sich zwischen den Seitenfenstern und dem Kopf eines Insassens des Fahrzeugs im Kollisionsfall ein Gassack. Der Gassack wird im allgemeinen von einem an der C-Säule des Fahrzeugs angeordneten Gasgenerator befüllt. Der Gasgenerator steht mit dem Gassack über eine Verbindungsleitung des oben beschriebenen Typs in Verbindung. Damit der sich entlang den Seitenscheiben des Fahrzeugs erstreckende Gassack gleichmäßig befüllt werden kann, weist die Verbindungsleitung einen sich über eine beträchtliche Länge in den Gassack erstreckenden Abströmabschnitt auf, der auch als Gaslanze bezeichnet wird und mit mehreren Abströmöffnungen versehen ist. Dadurch tritt Gas über eine beträchtliche Länge des Gassacks aus, die vom Fahrzeugtyp abhängt und beispielsweise im Bereich von 1,2 m liegt, und der Gassack wird gleichmäßig befüllt. Die Abströmöffnungen sind üblicherweise durch gefräste Schlitze gebildet, wobei innerhalb des Gassacks ca. zwei bis vier Schlitze vorgesehen sind. Da das Gas während des Entfaltungsvorgangs des Gassacks innerhalb der Gaslanze mit sehr hoher Geschwindigkeit, die im Überschallbereich liegen kann, strömt, müssen die Schlitze eine beträchtliche Länge aufweisen, so daß eine ausreichende Gasmenge seitlich aus der Gaslanze abströmen kann. Das Fräsen dieser Schlitze ist daher zeitaufwendig und teuer. Die gefrästen Abströmöffnungen schwächen darüber hinaus die Struktur der Gaslanze und sind nur schwer zu entgraten.

Aus der DE-A-1 956 677, die als nächstkommender Stand der Technik angesehen wird, ist ein Diffusor bekannt, der Gas von einem Gasgenerator zur einem Gassack leiten kann.

Aus der DE-A-196 13 095 ist eine Verbindungsleitung zwischen einem Gasgenerator und einem entfernt von diesem angeordneten Gassack bekannt. Die Verbindungsleitung weist Ausströmöffnungen im Bereich des Gassacks auf.

Mit der Erfindung soll die Herstellung der Verbindungsleitung für ein Gassack-Insassenschutzsystem vereinfacht werden.

Zur Lösung dieser Aufgabe ist erfindungsgemäß bei einer Verbindungsleitung der eingangs genannten Art vorgesehen, daß die Gasführungsfläche konvex gekrümmt ist. Durch eine solche Geometrie weist jede Abströmöffnung eine Gasführungsfläche auf, durch die das in dem Abströmabschnitt der Verbindungsleitung strömende Gas gezwungen wird, seitlich abzuströmen. Der abzweigende Gasstrom kann dabei durch Veränderung der Geometrie der Abströmöffnung bezüglich seiner Richtung und Größe beeinflußt werden. Die Abströmöffnung kann durch Eindrücken oder Einprägen hergestellt werden. Beispielsweise können durch verschieden tiefes Eindrücken eines kreiskegelförmigen Stempels strömungsgünstige Geometrien der Abströmöffnung entstehen, wobei die Gasführungsfläche in der Draufsicht dann im wesentlichen dreieckförmig oder von einer hyperbelartigen Kurve berandet sein kann. Die Abströmöffnung kann beispielsweise durch einen kombinierten Präge-Schneide-Stempel in einem Arbeitsgang hergestellt werden. Kleine Toleranzen bei der Herstellung werden erreicht, wenn bei der Herstellung im Inneren der Verbindungsleitung eine Schnittmatrize mitgezogen wird.

Es ist vorteilhaft, daß die Gasführungsfläche entgegen einer Hauptströmungsrichtung der Gase in der Verbindungsleitung zum Gassack hin von der Außenfläche des Abströmabschnittes der Verbindungsleitung aus bis zu einer vorbestimmten Tiefe schräg in das Innere der Verbindungsleitung verläuft. Durch eine solche kiemenartige Geometrie wird das in der Verbindungsleitung strömende Gas direkt aus seiner Hauptströmungsrichtung abgelenkt, und das in dem Abströmabschnitt der Verbindungsleitung strömende Gas wird gezwungen, seitlich abzuströmen. Der abzweigende Gasstrom kann dabei durch Veränderung der Geometrie der Abströmöffnung bezüglich seiner Richtung und Größe beeinflußt werden.

Die Gasführungsfläche kann so ausgeführt sein, daß sie in der vorbestimmten Tiefe eine entgegen der Hauptströmungsrichtung ausgerichtete Stirnseite aufweist und sich die Breite der Gasführungsfläche zu der Außenfläche des Abströmabschnittes der Verbindungsleitung hin verringert.

In Weiterbildung der Erfindung weist der sich in den Gassack erstreckende Abströmabschnitt der Verbindungsleitung mehrere in der Hauptströmungsrichtung hintereinander angeordnete Abströmöffnungen auf, wobei der zur Hauptströmungsrichtung senkrechte Querschnitt der Abströmöffnungen bei in der Hauptströmungsrichtung weiter hinten liegenden Abströmöffnungen größer ist als bei weiter vorne liegenden Abströmöffnungen. Auf diese Weise kann der Druckabfall des Gases entlang der Verbindungsleitung kompensiert werden, und es kann bei allen Abströmöffungen eine gleich große Menge abströmenden Gases realisiert werden.

Es wird auch vorgeschlagen, daß die vorbestimmte Tiefe der Abströmöffnungen bei den in der Hauptströmungsrichtung weiter hinten liegenden Abströmöffnungen größer ist als bei weiter vorne liegenden Abströmöffnungen. Auf diese Weise kann der für den Gasdurchtritt verfügbare Querschnitt auf einfache Weise erhöht werden.

Weitere Merkmale und Vorteile der Erfindung ergeben sich aus der folgenden Beschreibung und aus der Zeichnung, auf die Bezug genommen wird. In der Zeichnung zeigen:
- Fig. 1 eine schematische Seitenansicht eines erfindungsgemäßen Gassack-Insassenschutzsystems gemäß einer ersten Ausführungsform,
- Fig. 2 eine abschnittsweise Draufsicht auf die in der Fig. 1 gezeigten Verbindungsleitung im Bereich einer Abströmöffnung,
- Fig. 3 eine Schnittansicht des in der Fig. 2 gezeigten Abströmabschnitts der Verbindungsleitung entlang der Linie III - III,
- Fig. 4 eine Schnittansicht des in der Fig. 3 gezeigten Abströmabschnitts der Verbindungsleitung entlang der Linie IV-IV,

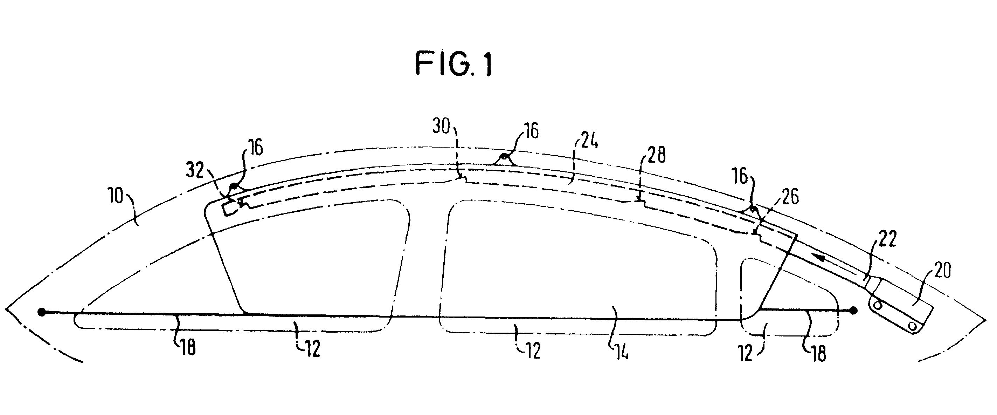

In der Fig. 1 ist ein erfindungsgemäßes Gassack-Insassenschutzsystem gemäß einer ersten Ausführungsform gezeigt, das an einer strichpunktiert dargestellten Fahrzeugstruktur 10 angeordnet ist. In dieser Fahrzeugstruktur 10 sind Seitenscheiben 12 angedeutet. Ein Gassack 14 deckt die Seitenscheiben 12 in seinem entfalteten Zustand wenigstens teilweise ab und ist mit der Fahrzeugstruktur 10 über Befestigungspunkte 16 und Spannbänder 18 verbunden. Zum Befüllen des Gassacks 14 dient ein Gasgenerator 20, der mit dem Gassack 14 über eine Verbindungsleitung 22 in Verbindung steht. Die Hauptströmungsrichtung der Gase in der Verbindungsleitung 22 zum Gassack 14 hin ist durch einen Pfeil gekennzeichnet. Innerhalb des Gassacks 14 erstreckt sich ein Abströmabschnitt 24 der Verbindungsleitung 22, der mit mehreren Abströmöffnungen 26, 28, 30 und 32 versehen ist. Der Abstand der Abströmöffnungen 26, 28, 30 und 32 ist zwischen den in Hauptströmungsrichtung weiter hinten liegenden Abströmöffnungen 30 und 32 größer als zwischen den weiter vorne liegenden Abströmöffnungen 26 und 28. Die Abströmöffnungen 26 bis 32 dienen dazu, eine gleichmäßige Befüllung des Gassacks 14 während seines Entfaltungsvorgangs sicherzustellen.

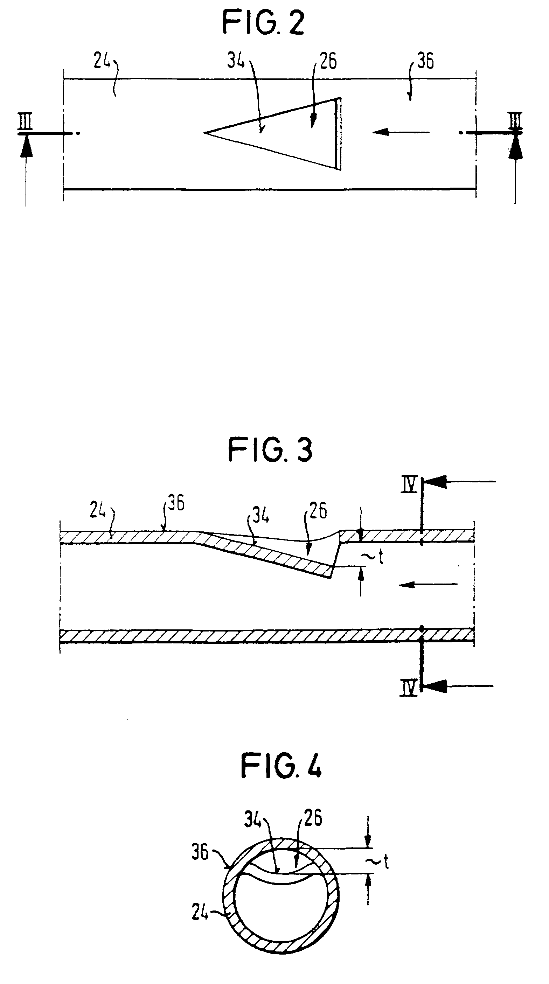

Eine Draufsicht des Abströmabschnitts 24 mit der Abströmöffnung 26 ist in der Fig. 2 dargestellt. Die Hauptströmungsrichtung der Gase ist wiederum mit einem Pfeil angedeutet. In der Draufsicht weist die Abströmöffnung 26 eine Dreiecksform auf, deren Breite sich in der Hauptströmungsrichtung verringert.

Fig. 3 zeigt eine Schnittansicht des Abströmabschnitts 24 der Verbindungsleitung 22 im Bereich der Abströmöffnung 26. Die Abströmöffnung 26 weist eine Gasführungsfläche 34 auf, die entgegen der durch den Pfeil angedeuteten Hauptströmungsrichtung von der Außenfläche 36 des Ahströmabschnitts 24 aus bis zu einer vorbestimmten Tiefe t in das Innere des Abströmabschnitts 24 der Verbindungsleitung 22 verläuft. Die Gasführungsfläche ist durch einen eingedrückten Teil der Wandung des Abströmabschnittes gebildet, der als Leitblech wirkt. Entlang dem Abströmabschnitt 24 der Verbindungsleitung 22 strömendes Gas wird durch die Gasführungsfläche 34 aus der Hauptströmungsrichtung abgelenkt und in das Innere des Gassacks geleitet. Richtung und Größe des abgezweigten Gasstroms sind von der Tiefe t und den weiteren Abmessungen des für den Gasdurchtritt verfügbaren Querschnitts der Abströmöffnung 26 sowie von dem Neigungswinkel der Gasführungsfläche 34 zur Hauptströmungsrichtung abhängig.

In der Fig. 4 ist eine Schnittansicht des Abströmabschnitts 24 entlang der Linie IV-IV in Fig. 3 dargestellt. Die Gasführungsfläche 34 ist in der Ansicht der Fig. 4 in einer Ebene senkrecht zur Hauptströmungsrichtung betrachtet kreisabschnittsförmig gekrümmt. Aus den Figuren 2, 3 und 4 ist damit zu erkennen, daß die Gasführungsfläche 34 durch Eindrücken der Wandung des Abströmabschnittes 24 der Verbindungsleitung gebildet ist, wobei die Gasführungstläche konvex ist und wobei der Eindrückvorgang mit einem sich in der Hauptströmungsrichtung verjüngenden kreiskegelförmigen Stempel bewirkt wurde. Dieser Stempel ist ein kombinierter Präge-Schneide-Stempel, der den Abströmabschnitt 24 quer zur Hauptströmungsrichtung anschneidet und die Abströmöffnung 26 bis zu der Tiefe t ausformt. In nur einem Arbeitsgang wird dadurch die Abströmöffnung 26 ausgeformt. Bei Einsatz mehrerer Präge-Schneide-Stempel können mehrere Abströmöffnungen 26, 28, 30 und 32 gleichzeitig in den Abströmabschnitt 24 der Verbindungsleitung 22 eingebracht werden. Die Abströmöffnungen 26, 28, 30 und 32 können spanfrei hergestellt werden. Eventuelle Schnittgrate liegen dabei im Inneren der Verbindungsleitung 22, so daß der Gassack nicht verletzt werden kann.

## Patentansprüche

1. Verbindungsleitung für ein Gassack-Insassenschutzsystem, wobei die Verbindungsleitung (22) zum Befüllen eines Gassacks (14) mit Druckgas vorgesehen ist und einen sich in den Gassack (14) erstreckenden Abströmabschnitt (24) aufweist, der mit wenigstens einer Abströmöffnung (26, 28, 30, 32) versehen ist, wobei an der Abströmöffnung (26, 28, 30, 32) wenigstens eine Gasführungsfläche (34) angeordnet ist, die von der Außenfläche (36) des Abströmabschnittes (24) der Verbindungsleitung (22) aus bis zu einer vorbestimmten Tiefe (t) in das Innere des Abströmabschnittes (24) der Verbindungsleitung (22) verläuft, **dadurch gekennzeichnet, daß** die Gasführungsfläche (34) konvex gekrümmt ist.

2. Verbindungsleitung nach Anspruch 1, **dadurch gekennzeichnet, daß** die Gasführungsfläche (34) schräg in das Innere des Abströmabschnitts (24) der Verbindungsleitung (22) verläuft.

3. Verbindungsleitung nach Anspruch 1, **dadurch gekennzeichnet, daß** die Gasführungsfläche (34) entgegen einer Hauptströmungsrichtung der Gase in der Verbindungsleitung (22) zum Gassack (14) hin von der Außenfläche (36) des Abströmabschnittes (24) der Verbindungsleitung (22) aus bis zu einer vorbestimmten Tiefe (t) schräg in das Innere des Abströmabschnittes (24) der Verbindungsleitung (22) verläuft.

4. Verbindungsleitung nach Anspruch 3, **dadurch gekennzeichnet, daß** die Gasführungsfläche (34) durch einen eingedrückten Teil der Wandung des Abströmabschnittes (24) der Verbindungsleitung (22) gebildet ist.

5. Verbindungsleitung nach Anspruch 4, **dadurch gekennzeichnet, daß** die Gasführungsfläche (34) in der vorbestimmten Tiefe (t) eine entgegen der Hauptströmungsrichtung ausgerichtete Stirnseite aufweist.

6. Verbindungsleitung nach einem der vorstehenden Ansprüche, **dadurch gekennzeichnet, daß** sich die Breite der Gasführungsfläche (34) von der Stirnseite zu der Außenfläche (36) des Abströmabschnittes (24) der Verbindungsleitung (22) hin verringert.

7. Verbindungsleitung nach einem der vorstehenden Ansprüche, **dadurch gekennzeichnet, daß** der sich in dem Gassack (14) erstreckende Abströmabschnitt (24) der Verbindungsleitung (22) mehrere in der Hauptströmungsrichtung hintereinander angeordnete Abströmöffnungen (26, 28, 30, 32) aufweist, wobei der zur Hauptströmungsrichtung senkrechte Querschnitt und/oder der zur Hauptströmungsrichtung parallele Querschnitt der Abströmöffnungen bei in der Hauptströmungsrichtung weiter hinten liegenden Abströmöffnungen größer ist als bei weiter vorne liegenden Abströmöffnungen.

8. Verbindungsleitung nach Anspruch 7, **dadurch gekennzeichnet, daß** die vorbestimmte Tiefe der Abströmöffnungen bei in der Hauptströmungsrichtung weiter hinten liegenden Abströmöffnungen größer ist als bei weiter vorne liegenden Abströmöffnungen.

9. Verbindungsleitung nach einem der vorstehenden Ansprüche, **dadurch gekennzeichnet, daß** der sich in den Gassack (14) erstreckende Abströmabschnitt (24) der Verbindungsleitung (22) mehrere in der Hauptströmungsrichtung hintereinander angeordnete Abströmöffnungen (26, 28, 30, 32) aufweist, wobei in Hauptströmungsrichtung weiter hinten liegende benachbarte Abströmöffnungen einen größeren Abstand zueinander aufweisen als weiter vorne liegende Abströmöffnungen.

10. Gassack-Insassenschutzsystem, **gekennzeichnet durch** eine Verbindungsleitung nach einem der vorstehenden Ansprüche.

## Claims

1. A connecting line for a gas bag-type occupant protection system, the connecting line (22) being provided for inflating a gas bag (14) with compressed gas and comprising a gas exit section (24) which extends into the gas bag (14) and is provided with at least one gas exit port (26, 28, 30, 32), the gas exit port (26, 28, 30, 32) having at least one gas guidance surface (34) arranged thereon which extends from the outer surface (36) of the gas exit section (24) of the connecting line (22) as far as to a predetermined depth (t) into the interior of the gas exit section (24) of the connecting line (22), **characterized in that** the gas guidance surface (34) is convexly curved.

2. The connecting line as set forth in claim 1, **characterized in that** the gas guidance surface (34) extends obliquely into the interior of the gas exit section (24) of the connecting line (22).

3. The connecting line as set forth in claim 1, **characterized in that** the gas guidance surface (34) extends opposite to a main flow direction of the gases in the connecting line (22) towards the gas bag (14) from the outer surface (36) of the gas exit section (24) of the connecting line (22) as far as to a predetermined depth (t) obliquely into the interior of the gas exit section (24) of the connecting line (22).

4. The connecting line as set forth in claim 3, **characterized in that** the gas guidance surface (34) is formed by an indented part of the wall of the gas exit section (24) of the connecting line (22).

5. The connecting line as set forth in claim 4, **characterized in that** the gas guidance surface (34) comprises in the predetermined depth (t) an end face oriented opposite to the main flow direction.

6. The connecting line as set forth in any of the preceding claims, **characterized in that** the width of the gas guidance surface (34) decreases from the end face towards the outer surface (36) of the gas exit section (24) of the connecting line (22).

7. The connecting line as set forth in any of the preceding claims, **characterized in that** the gas exit section (24) of the connecting line (22) extending in the gas bag (14) comprises a plurality of gas exit ports (26, 28, 30, 32) arranged in sequence along the main flow direction, the cross-section perpendicular to the main flow direction and/or the cross-section parallel to the main flow direction of the gas exit ports where located further downstream in the main flow direction being larger than that of the gas exit ports located further upstream.

8. The connecting line as set forth in claim 7, **characterized in that** the predetermined depth of the gas exit ports located further downstream in the main flow direction is larger than that of the gas exit ports located further upstream.

9. The connecting line as set forth in any of the preceding claims, **characterized in that** the gas exit section (24) of the connecting line (22) extending into the gas bag (14) comprises a plurality of gas exit ports (26, 28, 30, 32) arranged in sequence along the main flow direction, neighboring gas exit ports located further downstream in the main flow direction being arranged at a larger distance in relation to each other than the gas exit ports located further upstream.

10. A gas bag-type occupant protection system, **characterized by** a connecting line as set forth in any of the preceding claims.

## Revendications

1. Conduite de liaison pour un système de protection par coussin à gaz de passagers de véhicule, la conduite de liaison (22) étant prévue pour remplir de gaz sous pression un coussin à gaz (14) et présentant un tronçon de sortie de gaz (24) s'étendant dans le coussin à gaz (14), lequel est pourvu d'au moins un orifice de sortie de gaz (26, 28, 30, 32), et au niveau de l'orifice de sortie de gaz (26, 28, 30, 32) étant agencée au moins une surface de guidage de gaz (34) qui s'étend depuis la surface extérieure (36) du tronçon de sortie de gaz (24) de la conduite de liaison (22) jusqu'à une profondeur (t) prédéterminée à l'intérieur du tronçon de sortie de gaz (24) de la conduite de liaison (22), **caractérisée en ce que** la surface de guidage de gaz (34) est incurvée de forme convexe.

2. Conduite de liaison selon la revendication 1, **caractérisée en ce que** la surface de guidage de gaz (34) s'étend en oblique jusqu'à l'intérieur du tronçon de sortie de gaz (24) de la conduite de liaison (22).

3. Conduite de liaison selon la revendication 1, **caractérisée en ce que** la surface de guidage de gaz s'étend à l'encontre d'une direction principale d'écoulement des gaz dans la conduite de liaison (22) vers le coussin à gaz (14) depuis la surface extérieure (36) du tronçon de sortie de gaz (24) de la conduite de liaison (22) en oblique jusqu'à l'intérieur du tronçon de sortie de gaz (24) de la conduite de liaison (22).

4. Conduite de liaison selon la revendication 3, **caractérisée en ce que** la surface de guidage de gaz (34) est formée par une partie enfoncée de la paroi du tronçon de sortie de gaz (24) de la conduite de liaison (22).

5. Conduite de liaison selon la revendication 4, **caractérisée en ce que** la surface de guidage de gaz (34) présente à la profondeur (t) prédéterminée une face frontale orientée à l'encontre de la direction principale d'écoulement.

6. Conduite de liaison selon l'une des revendications précédentes, **caractérisée en ce que** la largeur de la surface de guidage de gaz (34) diminue depuis la face frontale vers la surface extérieure (36) du tronçon de sortie de gaz (24) de la conduite de liaison (22).

7. Conduite de liaison selon l'une des revendications précédentes, **caractérisée en ce que** le tronçon de sortie de gaz (24) de la conduite de liaison (22), lequel s'étend dans le coussin à gaz (14), présente plusieurs orifices de sortie de gaz (26, 28, 30, 32) agencés les uns derrière les autres en direction principale d'écoulement, la section transversale perpendiculaire à la direction principale d'écoulement et/ou la section transversale parallèle à la direction principale d'écoulement, des orifices de sortie de gaz, étant plus grande lorsque les orifices de sortie de gaz sont situées plus en aval en direction principale d'écoulement que lorsque les orifices de sortie de gaz sont situés plus en amont.

8. Conduite de liaison selon la revendication 7, **caractérisée en ce que** la profondeur prédéterminée des orifices de sortie de gaz est plus grande lorsque les orifices de sortie de gaz sont situés plus en aval en direction principale d'écoulement que lorsque les orifices de sortie de gaz sont situés plus en amont.

9. Conduite de liaison selon l'une des revendications précédentes, **caractérisée en ce que** le tronçon de sortie de gaz (24) de la conduite de liaison (22), lequel s'étend dans le coussin à gaz (14), présente plusieurs orifices de sortie de gaz (26, 28, 30, 32) agencés les uns derrière les autres en direction principale d'écoulement, des orifices de sortie de gaz voisins situés plus en aval en direction principale d'écoulement présentant les uns par rapport aux autres une plus grande distance que des orifices de sortie de gaz situés plus en amont.

10. Système de protection par coussin à gaz, de passagers de véhicules, **caractérisé par** une conduite de liaison selon l'une des revendications précédentes.
